# EUROPEAN PATENT APPLICATION

(11) **EP 3 048 560 A1**
(43) Date of publication of application: **27.07.2016**
(21) Application number: 15305069.5
(22) Date of filing: 23.01.2015
(51) Int. Cl.: G06K 9/00, G06F 17/30

(54) **Method for comparing shots issued from movies, corresponding system and computer program**

(71) Applicant: Thomson Licensing, 92130 Issy-les-Moulineaux (FR)
(72) Inventor: Oisel, Lionel, 35576 Cesson Sevigne (FR); Maetz, Yves, 35576 Cesson-Sévigné (FR); Eluard, Marc, 35576 Cesson-Sévigné (FR)
(74) Representative: Browaeys, Jean-Philippe

(57) **Abstract**

A method for comparing shots, comprises: providing a context description of a shot to be filmed; analyzing said context description and extracting therefrom a shot fingerprint, called a candidate shot fingerprint; comparing said candidate shot fingerprint to a set of reference shot fingerprints stored in a database and identifying, within said set, at least one reference shot fingerprint showing similarities with said candidate shot fingerprint, if any; issuing from said database at least one video sequence associated with said at least one identified reference shot fingerprint, if any. Such a method may provide guidance to a director for deciding how to film a given shot.

## Description

### 1. TECHNICAL FIELD

The invention relates to the field of cinema, and more specifically to the process of filmmaking. It focuses more thoroughly on how scenes, as described in a movie script, should be filmed to meet as closely as possible the director's expectations.

### 2. BACKGROUND

In the field of audiovisual production, films for example, the production follows a long and complex procedure. Nowadays, when shooting on a set, the team must be fully aware of the actions that each team member performs. In this way, the video content is produced as closely as possible to what the filmmaker imagined.

For producing an audiovisual content, a key document is the script. This document breaks down the movie into a succession of scenes and for each scene, describes the environment, the interactions between actors, their dialogs and other more or less important elements, such as props, etc. A critical step of movie creation is the script breakdown where the filmmaker (and production team) analyzes each scene of the movie and indicates how it should be done, i.e. what will be rendered on screen, as well as what is heard. This is done by first cutting it into shots, and then for each shot, defining the movement of the actors, the type of shot to be performed (close up, long shot, over the shoulder, etc.), the position, movement and setting of the camera, detailing the environment and the required accessories, etc. This task is called shot blocking.

In some cases, the description associated with a shot is added to the script document that then becomes a so-called shooting script. The details therein have to be chosen carefully. The way things are done can drastically impact the message conveyed by a scene and the feeling experienced by the spectators. As an example, for a given situation, a fast zoom on a face can generate fear, while a static wide angle is suited to depict a quiet scene. Small mistakes in these decisions can lead to inappropriate shots that do not correspond to what was expected.

In cinema schools, students learn different technics to shoot a scene. They also watch and analyze reference shots made by famous filmmakers such as Hitchcock and Spielberg.

However, when first directing a movie, it may be difficult for a beginner or a non-professional filmmaker to remember all the films and shots previously studied or watched and which could be used as a guiding pattern in order to decide how best to film a peculiar shot extracted from the movie script.

On the other hand, an experienced director may want to distinguish a movie in production from other movies and may thus also need to remember the shots that are "close" to the shot to be filmed, in order to differentiate it from already existing ones.

It is hence desirable to provide a method, which would provide some guidance to a director for deciding how to film a given shot.

Notably, it is desirable to provide such a method, which would allow comparing shots issued from movies.

### 3. SUMMARY

In a first aspect, the disclosure is directed to a method for comparing shots. A processing unit of a device obtains a context description of a shot, extracts from the context description a candidate shot fingerprint, compares the candidate shot fingerprint with a set of reference shot fingerprints stored to identify, within the set, at least one reference shot fingerprint showing similarities with the candidate shot fingerprint and outputs at least one video sequence associated with the at least one reference shot fingerprint showing similarities with the candidate shot fingerprint.

Various embodiments of the first aspect comprise:
That the comparison comprises computing a distance between a candidate vector associated with the candidate shot fingerprint and a reference vector associated to a reference shot fingerprint for a plurality of stored reference shot fingerprints; and building an ordered list of reference shot fingerprints, ordered as an increasing function of said computed distance.

That the candidate vector and the reference vectors each comprise N sub-vectors, with N an integer greater than or equal to 2, the computing comprises assessing distances between the N candidate sub-vectors and the corresponding N reference sub-vectors, and the building comprises building N ordered lists of reference sub-vectors ordered as an increasing function of said assessed distances.

Displaying the at least one video sequence.

That the at least one video sequence is output along with information relating to a movie to which said video sequence belongs. It is advantageous that the information relating to said movie comprises at least one piece of information belonging to a group comprising: title of the movie, director of the movie, date of the movie and genre of the movie.

That the context description is provided along with at least one search parameter.

That the at least one search parameter defines a creative intent for said shot to be filmed.

That the shot fingerprint comprises at least one element belonging to a group comprising: information indicating whether said shot is an interior or an exterior scene, information relating to the time of the day of said shot, information relating to the location of said shot, information relating to an action happening in said shot, a number of characters with dialog in said shot, a number of characters without dialog in said shot, information on props used in said shot, keywords associated with said shot and information on emotion associated with said shot.

In a second aspect, the disclosure is directed to a system for comparing shots. The system comprises at least one processing unit configured to obtain a context description of a shot, extract a candidate shot fingerprint from the context description, compare said candidate shot fingerprint with a set of reference shot fingerprints to identify within the set at least one reference shot fingerprint showing similarities with the candidate shot fingerprint, and output at least one video sequence associated with said at least one identified reference shot fingerprint.

Various embodiments of the first aspect comprise:
That the at least one processing unit is configured to compare by computing a distance between a candidate vector associated with the candidate shot fingerprint and a reference vector associated to a reference shot fingerprint for a plurality of stored reference shot fingerprints; and building an ordered list of reference shot fingerprints, ordered as an increasing function of said computed distance.

That the candidate vector and the reference vectors each comprise N sub-vectors, with N an integer greater than or equal to 2, the at least one processing unit is configured to compute by assessing distances between the N candidate sub-vectors and the corresponding N reference sub-vectors, and that the at least one processing unit is configured to build by building N ordered lists of reference sub-vectors ordered as an increasing function of said assessed distances.

That the at least one processing unit is further configured to display the at least one video sequence.

That the at least one processing unit is configured to output the at least one video sequence along with information relating to a movie to which said video sequence belongs.

In a third aspect, the disclosure is directed to a non-transitory program storage device, readable by a processing unit, tangibly embodying a program of instructions executable by the processing unit to obtain a context description of a shot, extract a candidate shot fingerprint from the context description, compare said candidate shot fingerprint with a set of reference shot fingerprints to identify within the set at least one reference shot fingerprint showing similarities with the candidate shot fingerprint, and output at least one video sequence associated with said at least one identified reference shot fingerprint.

### 4. BRIEF DESCRIPTION OF DRAWINGS

The invention can be better understood with reference to the following description and drawings, given by way of example and not limiting the scope of protection, and in which:
- Figure 1 illustrates a system for comparing shots according to an embodiment of the invention;
- Figure 2 shows a display menu of the system of figure 1, allowing a user to enter its search parameters;
- Figure 3 illustrates a method for comparing shots carried out by the system of figure 1;
- Figure 4 gives an example of search results provided by the system of figure 1 when entering a shot description.

The components in the figures are not necessarily to scale, emphasis instead being placed upon illustrating the principles of the invention.

### 5. DESCRIPTION OF ILLUSTRATIVE EMBODIMENTS

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can generally be referred to herein as a "circuit", "module" or "system". Furthermore, aspects of the present principles can take the form of a computer readable storage medium. Any combination of one or more computer readable storage medium(s) may be utilized.

The general principle relies on the use of shot fingerprints, corresponding to a set of data or features best describing shots, in order to compare shots. It finds interesting applications in providing guidance to directors and amateur cinematographers, in order to help them decide how best to film a given shot. According to embodiments of the disclosure, these users are provided with a set of shots previously created by directors in a similar situation. Such shots may help deciding how to film (or not to film) shots.

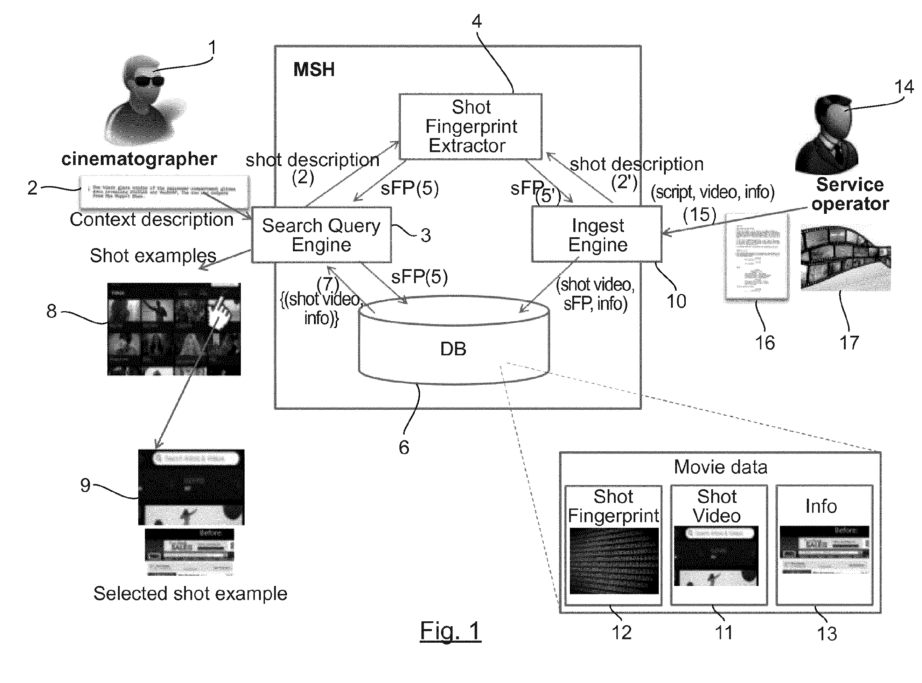

**Figure 1** describes the general architecture of a system according to an embodiment of the invention. A professional or amateur cinematographer 1 is looking for examples of realizations for a given shot of a movie in production. To this purpose, he provides a shot description 2 to a Search Query Engine 3. Such a shot description 2 is preferably a textual description of the principal features of the shot and may be typed directly on a keyboard of a computer or on a tablet connected to the Search Query Engine 3 or extracted from a script.

For example, a director wanting assistance with the realization of a shot extracts a description of the shot from the global script, preferably written using widely used script notation.

Search Query Engine 3 provides the shot description 2 to a Shot Fingerprint Extractor 4, which analyzes the candidate shot description and extracts therefrom a Shot Fingerprint, or sFP 5.

Search Query Engine 3 queries a database DB 6, in order to find shots showing similarities with the candidate sFP 5. Database DB 6 returns a set of video sequences corresponding to context description 2 given by cinematographer 1, along with related information, as illustrated by arrow 7.

Search Query Engine 3 displays a mosaic 8 of shot examples 7 to cinematographer 1, who may navigate among them and click on one of them in order to watch the corresponding video sequence 9. During navigation, the movie related information may be displayed when the user's cursor crosses one of the shots.

The system of **Figure 1** also comprises an Ingest Engine 10, which is used, in particular in a preliminary phase, to supply database DB 6 with reference shot videos 11, stored with shot fingerprints 12 and related information 13, also called metadata.

Such a preliminary phase, aiming at populating database DB 6, is performed by a service operator 14. For a movie, service operator 14 may provide 15 Ingest Engine 10 with the movie script 16 that contains the descriptions of the succession of shots, the video 17 from which the video shots will be extracted and optionally metadata about the movie (title, director, year, genre, etc.), as well as, optionally, shot alignment data.

Ingest Engine 10 parses the movie script and sends the textual shot descriptions 2' to Shot Fingerprint Extractor 4, which generates the corresponding shot fingerprints sFP 5'. If no alignment data between shots and videos is available, a script alignment process may be used at this stage in order to align them, i.e. build the link between a textual shot description and the corresponding video sequence.

For each shot description 2', Ingest Engine 10 stores in database DB 6 the shot fingerprint sFP 5', the corresponding video sequence and movie related information.

Service operator 14 provides the data one movie after the other until the size of database DB 6 is significant enough to be used.

Hence, a database of existing shot descriptions with associated video sequences, which have been extracted from a set of reference movies, is available. They are stored in association in database DB 6, along with their shot fingerprints, as extracted by Shot Fingerprint Extractor 4.

In Figure 1, the Search Query Engine 3, the Shot Fingerprint Extractor 4, the Ingest Engine 10 and the database DB 6 comprise the necessary hardware and software resources to perform the functions, such as for example processing units (microprocessors), memory, user interfaces, communication interfaces, internal connections and power supply. It will be appreciated that different parts can be implemented using at least partly the same hardware and software; for example, Search Query Engine 3 and Shot Fingerprint Extractor 4 can be implemented on the same processing unit (or processing units).

The system of **Figure 1**, comprising Search Query Engine 3, database DB 6, Shot Fingerprint Extractor 4 and Ingest Engine 10 may be designated as a Movie Shot Helper MSH, as it provides guidance to cinematographer 1 for filming shots. Such a Movie Shot Helper MSH is preferably web-based.

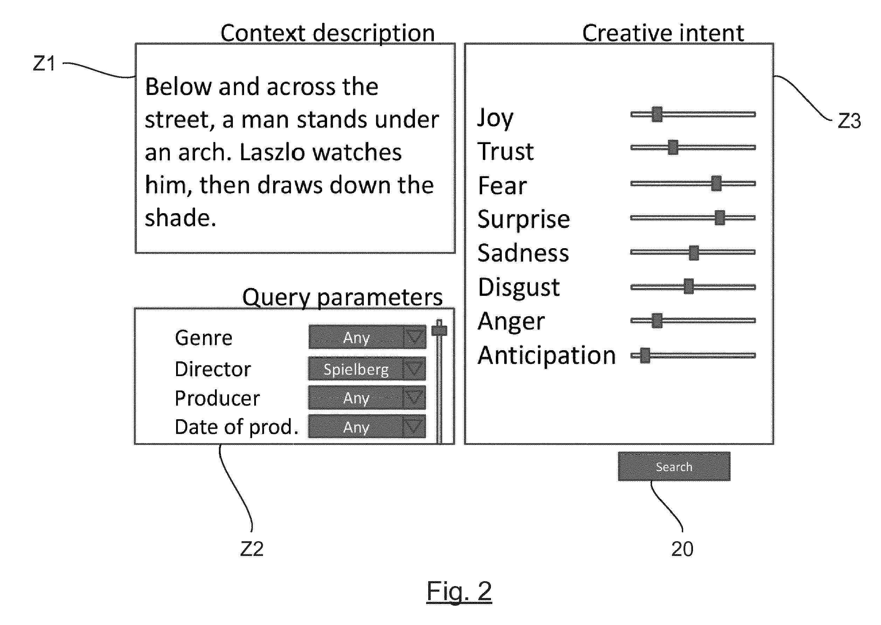

In a specific embodiment, cinematographer 1 may also tune search parameters, when accessing Search Query Engine 3, as illustrated in **Figure 2**, which illustrates a menu displayed by the MSH module.

Such a menu comprises three main zones:
- a first zone Z1, in which cinematographer 1 enters the context description 2 of the shot he intends to film. As already described, context description 2 may be an extract copied from a larger script, or a short textual description, generally comprising a few sentences with important keywords describing the shot;
- a second zone Z2, comprising several query parameters, such as the genre of the movie, its director, its producer, the date of production,... For each query parameter, cinematographer 1 may either select the default parameter ("Any"), or restrict the search area to a specific value of the parameter (for example "Spielberg" for the query parameter "Director");
- a third zone Z3, in which cinematographer 1 may express the creative intent targeted for the shot to be filmed. A list of feelings and emotions are displayed to cinematographer 1: joy, trust, fear, surprise, sadness, disgust, anger and anticipation. Of course, those are only examples, and others may be added or substituted in the menu. Next to each feeling/emotion, cinematographer 1 may displace a cursor indicating the intensity of feeling he is looking for. He may also select a default value, if he does not want to take account of a given feeling/emotion in the search. Such a default value may be chosen by selecting a checkbox, called for example "Any", located besides each feeling/emotion. In the exemplary embodiment of **Figure 2**, cinematographer 1 wishes to express mainly surprise and fear, and has set the corresponding cursors to the right hand side of the travel line.

A search button 20 is located at the bottom of the menu: once cinematographer 1 has entered context description 2 in zone Z1, selected the appropriate query parameters in zone Z2 and expressed his creative intent in zone Z3, he may launch the search by clicking on the search button 20.

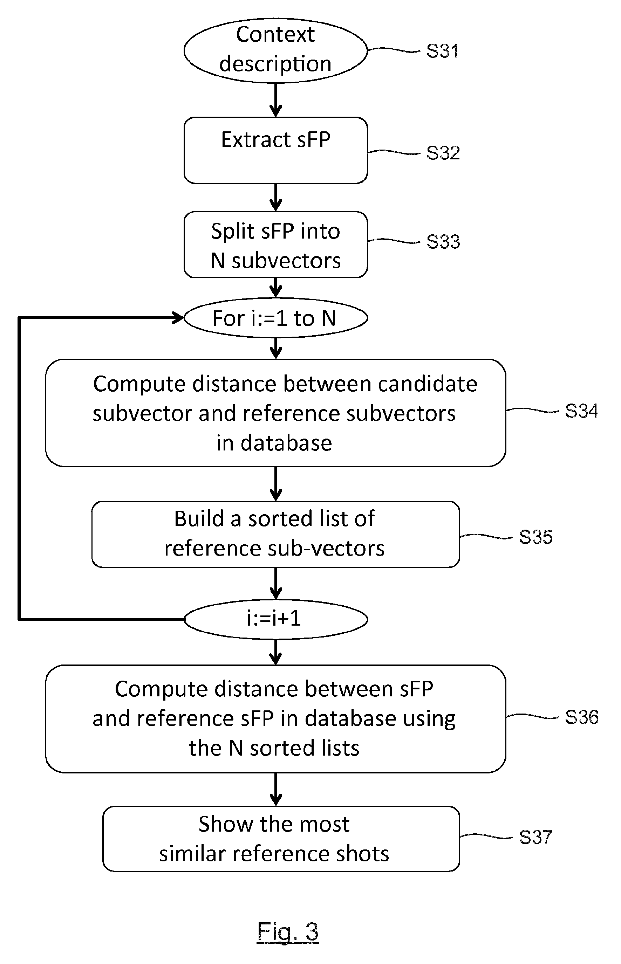

Such a search, performed by Search Query Engine 3, uses the shot fingerprint sFP 5 extracted from the context description 2 by Shot Fingerprint Extractor 4, and is illustrated by **Figure 3**. As already mentioned, the user provides a context description at step S31, and Shot Fingerprint Extractor 4 extracts therefrom a shot fingerprint sFP 5 at step S32. In an embodiment, such a shot fingerprint sFP 5 comprises:
- information regarding the context of the scene (interior or exterior scene, time of the day, location,...);
- information regarding the characters (number of characters with dialog, number of extras with no dialog and only presence in the scene);
- props identified (for example by writer) in the shot;
- keywords, automatically extracted using a keyword extractor;
- emotion extraction based on the joint analysis of the video and script data, for example as described by A. Hanjalic and L.-Q. Xu, in "Affective video content representation and modeling," IEEE Transactions on Multimedia, vol. 7, pp. 143-154, Feb. 2005..

In an embodiment, these elements constitute the base of fingerprints for shots. As may be observed, some of these elements may be expressed as real values (e.g. probability between 0 and 1 to have a given emotion in the shot), while others may be expressed as binary values (e.g. presence/absence of a given keyword), and yet others as integer values (e.g. number of actors in the shot).

The shot fingerprint sFP 5 hence results in a vector of values that is a mix of real, integer and binary values. For an easier use of the shot fingerprint, such a vector is split into homogeneous sub-vectors comprising a same type of values at step S33.

As an example, a shot fingerprint sFP 5 may be split into three sub-vectors:
- one containing the binary values;
- one containing the real values;
- one containing the integer values.

Each sub-vector is then processed independently, which allows to choose the most appropriate metric and distance in view of the type of values it contains. As an example, comparison between the binary components will rely on the use of the L₀ distance while the two others could rely on the L₂ norm.

When Search Query Engine 3 searches in database DB 6 reference shot fingerprints 5', which are similar to a candidate shot fingerprint 5, it first splits candidate shot fingerprint 5 into its three sub-vectors at step S33. Then, for each candidate sub-vector, it computes a distance between the candidate sub-vector and the corresponding sub-vectors stored in database DB 6 at step S34. Reference sub-vectors stored in database DB 6 are then ordered with respect to their distance to the corresponding candidate sub-vector, which provides three sorted lists (step S35).

Of course, in case there is no match, one or several of the lists may be empty.

In case the database is too big to compute distances between the candidate sub-vectors and the reference sub-vectors of database DB 6, efficient indexing technologies could be applied in order to compute the sorted lists in a tractable way. As an example, the so-called pq code library could be used to provide the nearest neighbors of a given candidate for the real and integer vectors (Product quantization for nearest neighbor search, Hervé Jégou, Matthijs Douze, Cordelia Schmid, IEEE PAMI, 2010).

Once three lists comprising reference sub-vectors have been built and sorted according to the distance of the reference sub-vectors to the candidate sub-vector, the distance from each reference shot fingerprint in database DB 6 to the candidate shot fingerprint is computed at step S36. To this purpose, in an embodiment, for a given reference shot fingerprint, such a distance is computed as the sum of the position of its sub-vectors in each of the three lists: a small distance indicates that the vector associated to the reference shot fingerprint is close to the vector associated to the candidate shot fingerprint, and hence that the corresponding reference shot is similar to the candidate shot.

Once the most similar reference shots have been identified, the corresponding shot descriptions are shown to cinematographer 1 at step S37. The related video extracts may be displayed as well, therefore giving to the director visual examples of previous realization techniques for a similar situation.

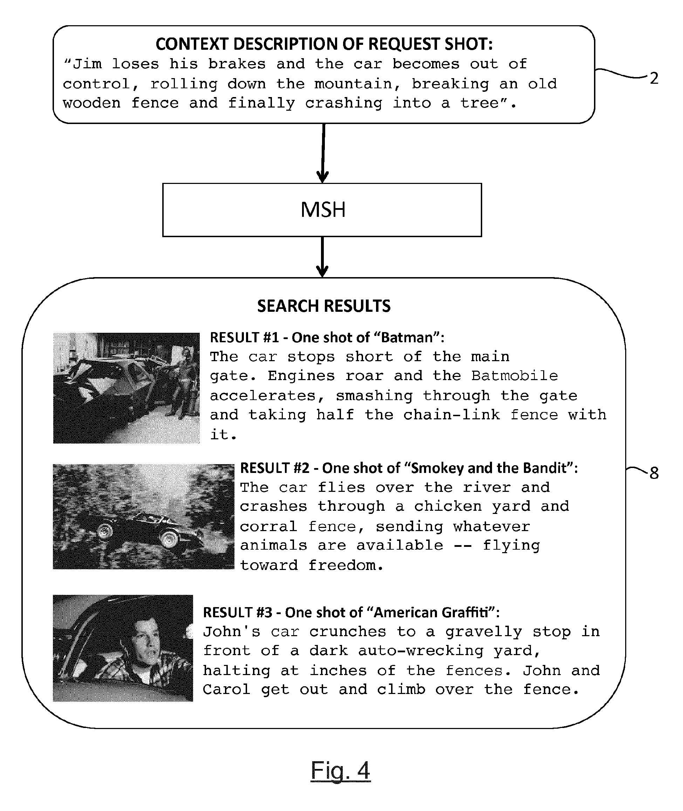

**Figure 4** illustrates an example for a shot to be filmed, for which a director 1 seeks for assistance, thanks to the use of the Movie Shot Helper MHS of **Figure 1****.** The context description of this request shot reads:
Jim loses his brakes and the car becomes out of control, rolling down the mountain, breaking an old wooden fence and finally crashing into a tree.

In the example, the database DB6 comprises the following script parts and the corresponding shots:
Shot #1 ("Batman"):
   The car stops short of the main gate. Engines roar and the Batmobile accelerates, smashing through the gate and taking half the chain-link fence with it.
Shot #2 ("Smokey and the Bandit"):
   The car flies over the river and crashes through a chicken yard and corral fence, sending whatever animals are available -- flying toward freedom.
Shot 3 ("American Graffiti"):
   John's car crunches to a gravelly stop in front of a dark auto-wrecking yard, halting at inches of the fences. John and Carol get out and climb over the fence.
Shot 4 ("Dukes of Hazzard"):
   Bo and Luke jump their Dodge Charger over the river but the police car driven by Rosco doesn't make it and is hit by Enos.
Shot 5 ("Interstellar"):
   Coop, the pilot of the Endurance, must decide between seeing his children again and the future of the human race.

The Shot Fingerprint Extractor 4 analyzes the query. Different prior art methods may be used. In these methods, the common words of the language used are not considered as will be illustrated hereinafter.

A first method comprises in simple extraction of words by removing determiners, pronouns, numerals, conjunctions and prepositions, resulting in the following set of words: {Jim, loses, brakes, car, becomes, control, rolling, mountain, breaking, old, wooden, fence, crashing, tree}. A second method applies well known part-of-speech tagging techniques. This allows to abstract concepts by taking the infinitive of the verbs and the singular for the nouns. The result is {lose(verb), brake(verb), car(noun), control(noun), roll(verb), mountain, break(verb), fence(noun), crash(verb), tree(noun)}. A third method takes into account the distance between the words in the query, such as if the words belong to the same sentence. These elements constitute a part of the candidate fingerprint sFP5 and reference fingerprints.

Then the candidate fingerprint sFP5 is matched with the reference fingerprints contained in the database DB6. Obviously, the method used to generate the fingerprints needs to be the same for the candidate and the reference. The following table illustrates scores obtained for the different references of the database according the three methods introduced before. The score is computed as follows: each time a word matches or, for the third method, each time the distance is respected, the score is incremented.

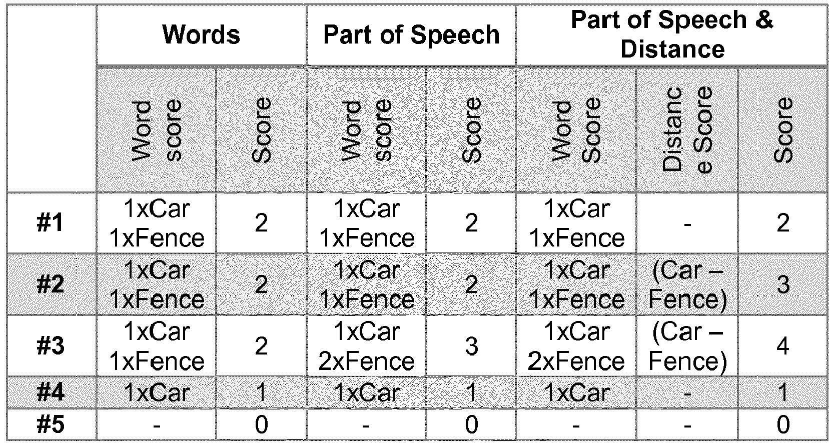

Finally, the most relevant shots are presented to cinematographer 1, as well as the corresponding video sequences, in a search results display 8 and ranked according the score obtained by the matching algorithm.

The cinematographer 1 may watch the video sequences corresponding to these three shots. This may inspire him and help him to decide how to direct this new shot.

## Claims

1. A method for comparing shots, comprising in a device comprising a processing unit:
- obtaining a context description of a shot;
- extracting from the context description a candidate shot fingerprint;
- comparing the candidate shot fingerprint with a set of reference shot fingerprints stored to identify, within the set, at least one reference shot fingerprint showing similarities with the candidate shot fingerprint;
- outputting at least one video sequence associated with the at least one reference shot fingerprint showing similarities with the candidate shot fingerprint.

2. The method of claim 1, wherein the comparing comprises:
- computing a distance between a candidate vector associated with the candidate shot fingerprint and a reference vector associated to a reference shot fingerprint for a plurality of stored reference shot fingerprints; and
- building an ordered list of reference shot fingerprints, ordered as an increasing function of said computed distance.

3. The method of claim 2, wherein the candidate vector and the reference vectors each comprise N sub-vectors, with N an integer greater than or equal to 2,
wherein the computing comprises assessing distances between the N candidate sub-vectors and the corresponding N reference sub-vectors, and wherein the building comprises building N ordered lists of reference sub-vectors ordered as an increasing function of said assessed distances.

4. The method of any one of claims 1 to 3, further comprising displaying the at least one video sequence.

5. The method of any one of claims 1 to 4, wherein the at least one video sequence is output along with information relating to a movie to which said video sequence belongs.

6. The method of claim 5, wherein the information relating to said movie comprises at least one piece of information belonging to a group comprising:
- title of the movie;
- director of the movie;
- date of the movie; and
- genre of the movie.

7. The method of any one of claims 1 to 6, wherein the context description is provided along with at least one search parameter.

8. The method of claim 6, wherein the at least one search parameter defines a creative intent for said shot to be filmed.

9. The method of any one of claims 1 to 8, wherein the shot fingerprint comprises at least one element belonging to a group comprising:
- information indicating whether said shot is an interior or an exterior scene;
- information relating to the time of the day of said shot;
- information relating to the location of said shot;
- information relating to an action happening in said shot;
- a number of characters with dialog in said shot;
- a number of characters without dialog in said shot;
- information on props used in said shot;
- keywords associated with said shot; and
- information on emotion associated with said shot.

10. A system for comparing shots, comprising at least one processing unit configured to:
- obtain a context description of a shot;
- extract a candidate shot fingerprint from the context description;
- compare said candidate shot fingerprint with a set of reference shot fingerprints to identify within the set at least one reference shot fingerprint showing similarities with the candidate shot fingerprint; and
- output at least one video sequence associated with said at least one identified reference shot fingerprint.

11. The system of claim 10, wherein the at least one processing unit is configured to, to compare said candidate shot fingerprint with a set of reference shot fingerprints to identify within the set at least one reference shot fingerprint showing similarities with the candidate shot fingerprint: compute a distance between a candidate vector associated with the candidate shot fingerprint and a reference vector associated to a reference shot fingerprint for a plurality of stored reference shot fingerprints; and build an ordered list of reference shot fingerprints, ordered as an increasing function of said computed distance.

12. The system of claim 11, wherein the candidate vector and the reference vectors each comprise N sub-vectors, with N an integer greater than or equal to 2, wherein at least one processing unit is configured to, to compute, assess distances between the N candidate sub-vectors and the corresponding N reference sub-vectors, and
wherein at least one processing unit is configured to, to build, build N ordered lists of reference sub-vectors ordered as an increasing function of said assessed distances.

13. The system of any one of claims 10 to 12, wherein the at least one processing unit is further configured to display the at least one video sequence.

14. The system of any one of claims 10 to 13, wherein the at least one video sequence is output along with information relating to a movie to which said video sequence belongs.

15. A non-transitory program storage device, readable by a processing unit, tangibly embodying a program of instructions executable by the processing unit to:
- obtain a context description of a shot;
- extract a candidate shot fingerprint from the context description;
- compare said candidate shot fingerprint with a set of reference shot fingerprints to identify within the set at least one reference shot fingerprint showing similarities with the candidate shot fingerprint; and
- output at least one video sequence associated with said at least one identified reference shot fingerprint.
